(19) Europäisches Patentamt / European Patent Office / Office européen des brevets

(11) **EP 0 980 130 B1**

(12) **FASCICULE DE BREVET EUROPEEN**

(45) Date de publication et mention
de la délivrance du brevet:
**16.04.2008   Bulletin 2008/16**

(51) Int Cl.:
***H02J 7/10*** *(2006.01)*

(21) Numéro de dépôt: **99401903.2**

(22) Date de dépôt: **26.07.1999**

(54) **Procédé de contrôle de la charge rapide d'accumulateur industriel à électrolyte alcalin**

Schnellladesteuerungsverfahren für einen industriellen Akkumulator mit alkalischem Elektrolyt

Method for controlling the rapid charging of an alkaline electrolyte industrial accumulator

(84) Etats contractants désignés:
**DE FR GB**

(30) Priorité: **13.08.1998   FR 9809914**

(43) Date de publication de la demande:
**16.02.2000   Bulletin 2000/07**

(73) Titulaire: **SAFT GROUPE SA**
**93170 Bagnolet (FR)**

(72) Inventeurs:
• **Berlureau, Thierry**
**33300 Bordeaux (FR)**
• **Bariand, Marc**
**33000 Bordeaux (FR)**
• **Liska, Jean-Louis**
**33200 Bordeaux (FR)**

(74) Mandataire: **Pochart, François et al**
**Hirsch & Associés**
**58, Avenue Marceau**
**75008 Paris (FR)**

(56) Documents cités:
**US-A- 5 315 228          US-A- 5 659 239**
**US-A- 5 703 468**

**EP 0 980 130 B1**

## Description

La présente invention concerne un procédé de contrôle utilisable pour charger rapidement un accumulateur industriel à électrolyte alcalin, notamment du type "sans maintenance" ou du type "étanche", en particulier un accumulateur nickel-métal hydrurable (Ni-MH).

Un accumulateur est dit "industriel" lorsqu'il possède une forte capacité supérieure à 10Ah, et généralement comprise entre 50Ah et 200Ah. Ces accumulateurs ont habituellement un conteneur de forme prismatique en matériau plastique contenant des électrodes planes. Leur géométrie parallélépipédique et la nature de leur bac ne leur permettent pas de résister à des surpressions importantes et leur pression interne maximale est de l'ordre de 1 à 2 bars.

Les accumulateurs industriels du type dit "sans maintenance" d'une part et du type dit "étanche" d'autre part présentent l'avantage de ne pas nécessiter de remise à niveau de l'électrolyte aqueux pendant toute leur durée d'utilisation, contrairement aux accumulateurs industriels du type dit "ouvert classique" ou du type dit "ouvert à maintenance allégée". Les batteries de tels accumulateurs sont notamment destinés à la traction de véhicules électriques. Dans cette application la durée de vie requise est d'environ 1 500 cycles de charge/décharge sur une période estimée à 10 ans. Une durée de vie aussi longue ne peut être atteinte que par une stricte limitation de la surcharge. En outre une utilisation de type "flotte" de ces véhicules impose de pouvoir effectuer une recharge de courte durée, par exemple 40% de la capacité nominale rechargée en moins de 15 minutes en garantissant l'absence de surcharge.

Au cours de la phase de charge d'un accumulateur à électrolyte alcalin se produisent respectivement l'oxydation et la réduction des matières électrochimiquement actives des électrodes positives et négatives. Ces réactions se produisent sans dégagement gazeux. Lorsque la matière active positive est entièrement oxydée, l'accumulateur entre dans la phase de surcharge. Un dégagement abondant d'oxygène gazeux apparaît sur l'électrode positive.

En régime rapide, l'oxygène dégagé n'a pas le temps d'être réduit (ou recombiné) à l'électrode négative. Cela provoque simultanément l'augmentation de la température et de la pression interne de l'accumulateur. Les accumulateurs industriels du type "sans maintenance" ou du type "étanche" ont une pression maximale de fonctionnement de l'ordre de 2 bars. L'augmentation de la pression interne conduit à l'ouverture de la soupape, donc à une perte d'électrolyte et une réduction de la durée de vie de la batterie par assèchement. En outre, il se produit un échauffement important qui est préjudiciable à la durée de vie de l'accumulateur.

Il est donc nécessaire de disposer d'un procédé permettant de recharger une batterie industrielle à électrolyte alcalin, notamment du type "sans maintenance" ou du type "étanche", dans un temps bref tout en évitant sa surcharge : la charge doit être interrompue au plus tard lorsque le taux de charge atteint 100%. Ce procédé doit en outre être applicable quel que soit l'état de charge initial de la batterie et quelle que soit sa température.

On a déjà proposé les critères de fin de charge comme le contrôle de l'augmentation de la température ($+\Delta\theta$) d'un accumulateur, la vitesse d'évolution de la température ($d\theta/dt$), l'augmentation relative de la température de l'accumulateur par rapport à une loi d'échauffement, ou encore, tout simplement, la température (voir US 5 703 468).

Ces critères sont adaptés aux accumulateurs dit "portables" qui sont de petite taille et de faible capacité (jusqu'à 10Ah). Ils possèdent un conteneur métallique généralement cylindrique. Les accumulateurs portables ont une faible inertie thermique : ils s'échauffent peu mais sont très sensibles aux variations de la température extérieure. On peut en tenir compte en effectuant une correction de température ambiante. Ces critères peuvent aussi être utilisés en régime lent pour les accumulateurs industriels de faible capacité lorsque l'inertie thermique est minimisée.

Une telle correction est sans effet sur les accumulateurs industriels, notamment à partir de 50Ah, qui ont des capacités nettement plus élevées que les accumulateurs portables. Leur échauffement est important et la nature de leur bac (matière plastique) ne permet pas d'évacuer facilement les calories générées pendant la charge. L'inertie thermique de ces accumulateurs interdit d'arrêter la charge en se basant sur leur température.

En outre les critères utilisant la température s'appliquent difficilement au couple Ni-MH en raison de l'accroissement continu de température pendant toute la durée de la charge.

Par ailleurs le critère de diminution de la tension ($-\Delta V$) couramment utilisé pour le couple Ni-Cd, ne peut être appliqué dans le cas présent car il correspond déjà au début de la phase de surcharge. De plus un critère basé sur la tension est peu fiable en raison du faible signal en tension généré par le couple Ni-MH en fin de charge (0mV à -5mV).

Dans le cas d'un accumulateur de capacité élevée, notamment Ni-MH, une charge à fort régime régie par les critères connus précédemment mentionnés conduirait soit à une détection prématurée de la fin de charge donc une charge insuffisante, soit à une non-détection de la fin de la charge et la destruction de l'accumulateur.

La présente invention propose un procédé de contrôle de la charge en régime rapide d'un accumulateur industriel à électrolyte alcalin du type "sans maintenance" ou du type "étanche", notamment nickel-métal hydrurable, en particulier un accumulateur ou une batterie d'accumulateurs ayant une capacité élevée (au moins 50Ah). Le procédé selon l'invention garantit l'arrêt de la charge à un taux de charge prescrit, compris entre 60% et 100% de la capacité nominale Cn de l'accumulateur, quel que soit son état de charge initial et sa température dans le domaine allant de -30°C à +50°C.

L'objet de la présente invention est un procédé de contrôle de la charge rapide d'un accumulateur industriel à électrolyte alcalin du type "sans maintenance" ou du type "étanche", éventuellement monté en batterie, possédant une capacité nominale Cn, une tension U et une température interne T, caractérisé en ce que l'arrêt de la charge à un taux de charge supérieur à 55% de Cn est effectué de la manière suivante :

- on fixe un seuil de tension Us correspondant au taux de charge final souhaité dudit accumulateur,
- on mesure la tension U et la température T dudit accumulateur,
- on calcule une tension corrigée Uc par la formule suivante :

$$Uc = U - k (T - Tc)$$

où les tensions sont exprimées en Volt, dans laquelle Tc est une température de référence choisie arbitrairement et k est un coefficient constant exprimé en Volt par unité de température,
- on compare Uc avec ledit seuil de tension Us et on arrête la charge lorsque Uc est au moins égale à Us.

On entend par charge rapide une charge réalisée à un régime au moins égal à 0,5lc, et de préférence de l'ordre de lc à 2lc, où $I_c$ est le courant nécessaire à la décharge de la capacité nominale Cn dudit accumulateur en une heure.
Le coefficient k est indépendant de la température interne de l'accumulateur et de la température extérieure dans son domaine de validité, c'est à dire pour les taux de charge supérieurs à 55%Cn. Il est aussi indépendant du régime de charge, notamment entre 0,75lc et 1,5lc. Sa valeur est déterminée expérimentalement pour chaque modèle d'accumulateur ou de batterie d'accumulateurs.
Ledit coefficient k est défini de la manière suivante :

- on trace la droite U=f(T) pour chaque valeur du taux de charge, à partir des courbes de charge dudit accumulateur établies à au moins deux températures initiales différentes,
- on mesure la pente de ladite droite, ladite pente étant égale à k dans le domaine des taux de charge supérieurs à 55% de Cn.

La pente kréf varie avec le taux de charge de l'accumulateur jusqu'à une valeur au moins égale à 55% de Cn, ensuite elle demeure constante.
Le seuil de tension Us, correspondant au taux de charge final souhaité, est déterminé expérimentalement à partir de la droite de variation d'une tension de référence Uréf en fonction du taux de charge %Cn dudit accumulateur. Ce seuil Us n'est valable que dans le domaine des taux de charge supérieurs à 55% de Cn.
Le seuil de tension Us est propre à l'accumulateur et dépend de son état de vieillissement. Pour un même taux de charge final, il varie selon le régime de charge choisi de 0,70 volt par Ic, soit par exemple une augmentation de 0,525V de Us lorsque l'on passe de d'un régime de 0,75lc à un régime de 1,5lc, la température de référence Tc restant inchangée.
Ledit seuil de tension Us est fixé de la manière suivante :

- on calcule une tension de référence Uréf à partir d'une courbe de charge dudit accumulateur selon la formule :

$$Uréf = U - kréf (T - Tc)$$

dans laquelle kréf est un coefficient égal à la pente de la droite U =f(T) qui est variable pour des taux de charge inférieurs ou égaux à 55% de Cn, puis constant pour des taux de charge supérieurs à 55% de Cn,
- on établit l'équation de la droite de variation de Uréf en fonction du taux de charge %Cn,
- on calcule ledit seuil Us à partir de ladite équation pour un taux de charge final souhaité supérieur à 55% de Cn.

Ledit seuil de tension Us dépend du régime de charge à raison de 0,70V par unité de courant exprimé en Ic, $I_c$ étant le courant nécessaire à la décharge de la capacité nominale Cn dudit accumulateur en une heure.
La température de référence Tc est une température choisie arbitrairement qui peut prendre toutes les valeurs, y compris 0°C. Les températures interne T et de référence Tc peuvent être exprimées dans toutes les unités usuelles de température.
On comprend que la tension corrigée Uc représente la tension U qu'aurait l'accumulateur si sa température interne T était égale àTc.
Selon une variante de l'invention, ladite température de référence Tc vaut 0°C, ladite tension de référence Uréf est calculée par la formule :

$$U\text{réf} = U - (k\text{réf} \times T)$$

et ladite tension corrigée est calculée par la formule suivante :

$$Uc = U - k\,T$$

L'invention sera mieux comprise et d'autres avantages et particularités apparaîtront à la lecture de la description qui va suivre, donnée à titre non limitatif, accompagnée des dessins annexés parmi lesquels:

- la figure 1 représente l'évolution de la tension corrigée Uréf et du coefficient kréf d'une batterie de capacité nominale Cn = 93Ah lors de la charge rapide pour Tc = 23°C;
- la figure 2 est analogue à la figure 1 pour Tc = 0°C ;
- la figure 3 est analogue à la figure 1 pour Tc = -10°C ;
- la figure 4 montre la variation de la température interne et de la tension de la batterie, ainsi que la valeur correspondante de la tension corrigée Uc pour Tc = 23°C, lors d'une charge rapide à un régime de 1,5Ic commencée à 21°C ;
- la figure 5 est analogue à la figure 4 pour une charge commencée à 0°C ;
- la figure 6 est analogue à la figure 4 pour une charge commencée à -10°C ;
- la figure 7 est analogue à la figure 4 pour une charge commencée à -20°C ;
- la figure 8 est analogue à la figure 4 pour un régime de 0,75Ic.

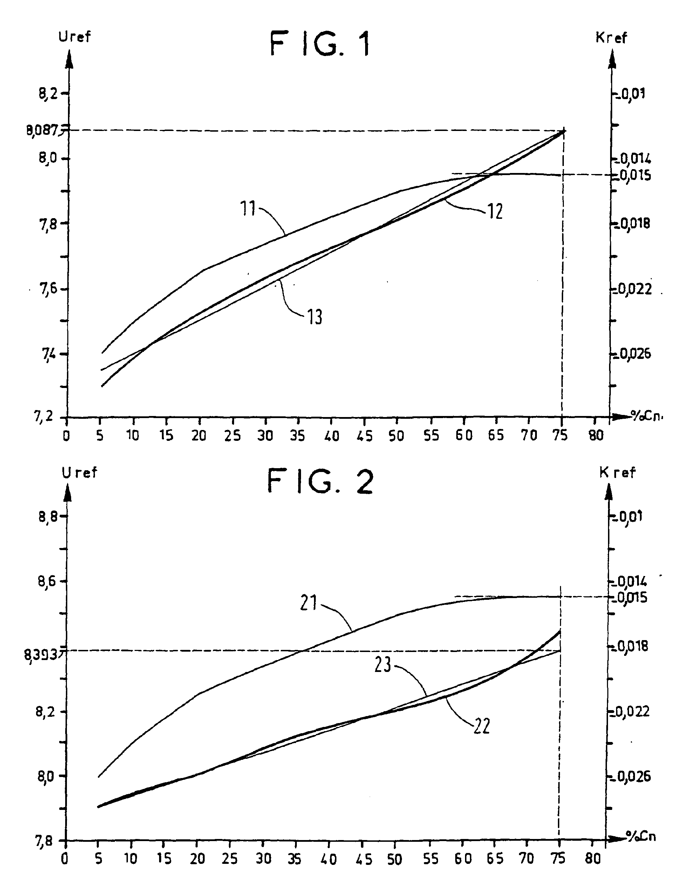

Sur les figures 1 à 3, la tension corrigée Uc en volt et la valeur du coefficient k en Volt/°C sont données en ordonnée, et en abscisse le taux de capacité chargé exprimé en % de la capacité nominale Cn de la batterie.

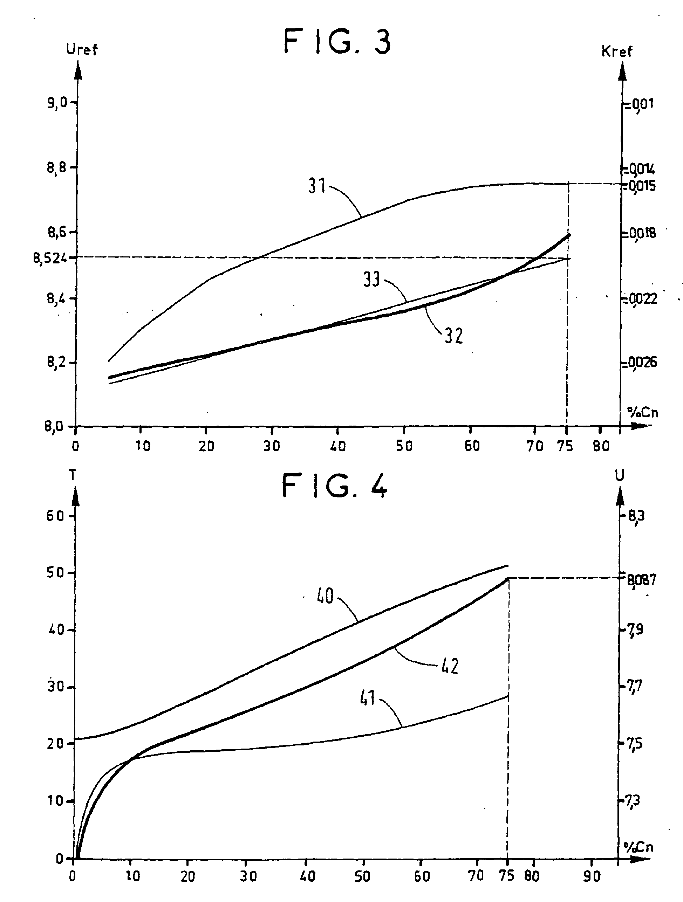

Sur les figures 4 à 8, la température interne T en °C, la tension U et la tension corrigée Uc en Volt sont données en ordonnée, et en abscisse le taux de capacité chargé exprimé en % de la capacité nominale Cn de la batterie.

A titre d'exemple, on applique le procédé selon l'invention à une batterie de cinq accumulateurs industriels nickel-métal hydrurable de type "sans maintenance". La batterie a une capacité nominale Cn de 93Ah et une tension moyenne en décharge de 6V.

Détermination de k :

A partir d'un taux de charge initial nul, on effectue plusieurs charges de la batterie à un même régime, par exemple de 1,5Ic, avec au moins deux températures initiales différentes, par exemple à 21°C et -10°C. Au cours de chaque charge, on mesure périodiquement la tension U et la température interne T de la batterie.

A partir des courbes précédemment établies, on reporte les valeurs de la tension U de la batterie en fonction de sa température interne T pour chaque taux de charge. On obtient une courbe U = f(T) qui est sensiblement linéaire et permet de calculer une pente kréf pour le taux de charge %Cn choisi.

On trace la courbe U = f(T) pour différents taux de charge %Cn de la batterie, et on reporte les valeurs de kréf obtenues pour tracer la courbe 11 de la figure 1.

Au-delà d'un taux de charge de 55% de Cn, on observe que la valeur de kréf est sensiblement constante quel que soit le taux de charge de la batterie. Dans cet exemple, T est exprimé en °C et kréf est constant et vaut k = -0,015V/°C pour un taux de charge supérieur à 55% de Cn.

Pour la batterie considérée, la formule permettant de calculer la tension corrigée Uc selon la présente invention est donc la suivante :

$$Uc = U + 0{,}015\,(T - Tc)$$

Détermination de Us :

A partir de l'une quelconque des courbes précédemment établies, on calcule la valeur de la tension de référence Uréf pour chaque taux de charge %Cn

Dans le cas représenté sur la figure 1, on a utilisé la courbe de charge obtenue avec une température initiale de 21°C et on a pris comme température de référence Tc une valeur de 23°C. On calcule donc Uréf selon la formule :

$$Uréf = U - kréf (T - 23)$$

La valeur de kréf utilisée dans ce calcul est celle qui est donnée par la courbe 11 de la figure 1 pour chaque état de charge. La courbe 12 est tracée avec un coefficient kréf qui n'est pas constant dans le domaine des taux de charge inférieurs ou égaux à 55% de Cn, et qui est constant et égal à k pour des taux de charge supérieurs à 55%Cn.

On constate que la tension de référence Uréf varie quasi-linéairement avec l'état de charge, comme le montre la courbe 12 de la figure 1. La pente de la courbe Uréf = f(%Cn) est suffisamment significative pour que l'on puisse l'utiliser pour déterminer avec précision le taux de charge final souhaité.

On assimile la courbe 12 à une droite 13 dont on calcule l'équation :

$$Uréf = 0,0106 (\%Cn) + 7,2923$$

L'utilisation de la valeur de kréf donnée par la courbe 11 dans ce calcul a pour but de tracer cette droite sur un domaine suffisament large pour pouvoir en établir l'équation avec précision. Le domaine d'exploitation de cette équation est limité aux taux de charge supérieurs à 55% de Cn

En introduisant le taux de charge final souhaité dans cette équation, comme par exemple un taux de charge de 75%, on peut calculer la tension d'arrêt Us de la charge qui est dans ce cas de :

$$Us = (0,0106 \times 75) + 7,2923 = 8,087 \text{ Volts.}$$

A titre d'illustration, on a représenté sur les figures 2 et 3 le calcul de Uréf en utilisant d'autres températures de référence Tc.

Dans le cas où Tc = 0°C, Uréf (courbe 22) est calculé par la formulet :

$$Uréf = U - (kréf \times T)$$

L'équation de la droite 23 devient :

$$Uréf = 0,0071 (\%Cn) + 7,8601$$

et on peut calculer Us pour un taux de charge final de 75% de Cn qui vaut :

$$Us = (0,0071 \times 75) + 7,8601 = 8,393 \text{ Volts.}$$

Dans le cas où Tc = -10°C, Uréf (courbe 32) est calculé par la formulet :

$$Uréf = U - kréf (T + 10)$$

L'équation de la droite 33 devient :

$$Uréf = 0,0056 (\%Cn) + 8,1039$$

et on peut calculer Us pour un taux de charge final de 75% de Cn qui vaut :Us = (0,0056 x 75) + 8,1039 = 8,524 Volts.

Il est bien entendu que lors du calcul de Uc au cours de la charge, on doit utiliser la même valeur de Tc que celle qui a servi à la détermination du seuil Us auquel on décide d'arrêter la charge.

EXEMPLE 1 :

La batterie de température initiale de 21°C (figure 4) est chargée à un régime de 1,5lc. On mesure périodiquement sa température interne (courbe 40) et sa tension (courbe 41). On voit bien que pour des accumulateurs de forte capacité, l'augmentation de la tension en charge est faible.

On calcule immédiatement la tension corrigée Uc (courbe 42) en prenant comme température de référence Tc = 23°C, selon la formule :

$$Uc = U + 0,015 \ (T - 23)$$

Dans ce calcul, le coefficient k est constant. La courbe de la tension corrigée Uc n'est significativement exploitable que dans le domaine des taux de charge supérieurs à 55% de Cn.

La charge est arrêtée lorsque Uc est au moins égale à Us, c'est-à-dire au moins égale à 8,087V. On vérifie que le taux de charge atteint par la batterie est bien de 75% de Cn.

EXEMPLE 2 :

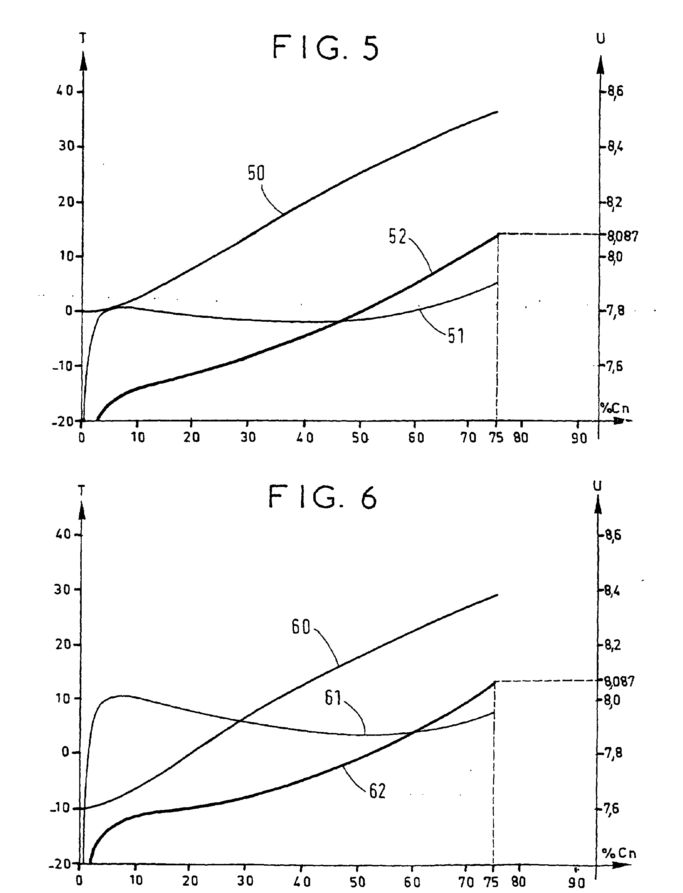

On reproduit la charge dans des conditions analogues à l'exemple 1, à l'exception du fait que la température initiale est de 0°C (figure 5).

On mesure périodiquement sa température interne (courbe 50) et sa tension (courbe 51) et on calcule la tension corrigée Uc (courbe 52) selon la formule : Uc = U + 0,015 (T - 23).

La charge est arrêtée lorsque Uc est au moins égale à 8,087V et le taux de charge atteint par la batterie est bien de 75% de Cn.

EXEMPLE 3 :

On reproduit la charge dans des conditions analogues à l'exemple 1, à l'exception du fait que la température initiale est de -10°C (figure 6).

On mesure périodiquement sa température interne (courbe 60) et sa tension (courbe 61) et on calcule la tension corrigée Uc (courbe 62) selon la formule: Uc = U + 0,015 (T - 23).

La charge est arrêtée lorsque Uc est au moins égale à 8,087V et le taux de charge atteint par la batterie est bien de 75% de Cn.

EXEMPLE 4 :

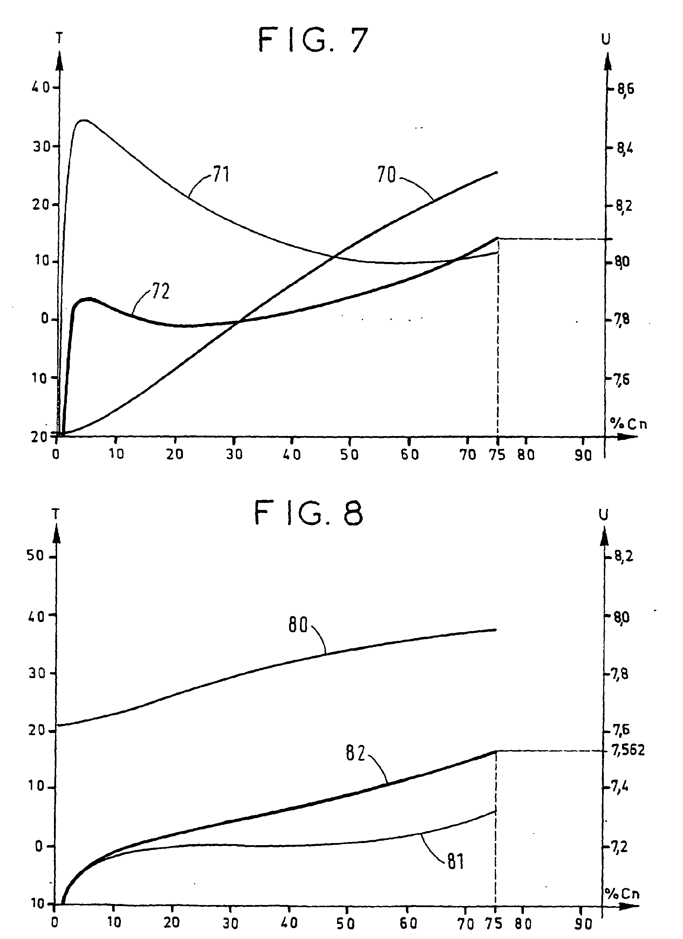

On reproduit la charge dans des conditions analogues à l'exemple 1, à l'exception du fait que la température initiale est de -20°C (figure 7).

On mesure périodiquement sa température interne (courbe 50) et sa tension (courbe 51) et on calcule la tension corrigée Uc (courbe 52) selon la formule : Uc = U + 0,015 (T - 23). On voit bien que pour des accumulateurs de forte capacité, l'échauffement est important.

La charge est arrêtée lorsque Uc est au moins égale à 8,087V et le taux de charge atteint par la batterie est bien de 75% de Cn.

EXEMPLE 5 :

On reproduit la charge dans des conditions analogues à l'exemple 1, à l'exception du fait que le régime est de 0,75lc (figure 8).

Comme précédemment, on mesure périodiquement la température interne T (courbe 80) et la tension U (courbe 81) de la batterie. On calcule la tension corrigée Uc (courbe 82) selon la formule :

$$Uc = U - 0,015 \ (T - 23)$$

Pour un même taux de charge final, le seuil de tension Us varie selon le régime de charge choisi de 0,70 volt par unité de courant exprimé en Ic, la température de référence Tc restant inchangée. Ici le passage d'un régime de 1,5lc à un régime de 0,75lc conduit à abaisser le seuil Us de 0,525V, soit de passer de 8,087V à 7,562V

La charge est donc arrêtée lorsque Uc est au moins égale à 7,562V et le taux de charge final atteint par la batterie est toujours de 75% de Cn.

EXEMPLE 6 :

On reproduit la charge dans des conditions analogues à l'exemple 3, à l'exception du fait que le régime est de 0,75Ic.

Comme précédemment, on mesure périodiquement sa température interne et sa tension et on calcule la tension corrigée Uc selon la formule :

$$Uc = U - 0,015 \ (T - 23)$$

La charge est arrêtée lorsque Uc est au moins égale à 7,562V et le taux de charge atteint par la batterie est bien de 75% de Cn.

## Revendications

1. Procédé de contrôle de la charge rapide d'un accumulateur industriel à électrolyte alcalin du type "sans maintenance" ou du type "étanche" possédant une capacité nominale Cn, une tension U et une température interne T, selon lequel l'arrêt de la charge à un taux de charge supérieur à 55% de Cn est effectué de la manière suivante :

   - on fixe un seuil de tension Us correspondant au taux de charge final souhaité dudit accumulateur,
   - on mesure la tension U et la température T dudit accumulateur,
   - on calcule une tension corrigée Uc par la formule suivante :

$$Uc = U - k \ (T - Tc)$$

   où les tensions sont exprimées en Volt, dans laquelle Tc est une température de référence choisie arbitrairement et k est un coefficient constant exprimé en Volt par unité de température,
   - on compare Uc avec ledit seuil de tension Us et on arrête la charge lorsque Uc est au moins égale à Us.

2. Procédé selon la revendication 1, dans lequel ledit coefficient k est défini de la manière suivante:

   - on trace la droite U=f(T) pour chaque valeur du taux de charge, à partir des courbes de charge dudit accumulateur établies à au moins deux températures initiales différentes,
   - on mesure la pente de ladite droite dans le domaine des taux de charge supérieurs à 55% de Cn, ladite pente étant égale à k.

3. Procédé selon la revendication 2, dans lequel ledit coefficient k vaut pour-0,015V/°C pour des taux de charge supérieurs à 55% de Cn.

4. Procédé selon l'une des revendications précédentes, dans lequel ledit seuil de tension Us est fixé de la manière suivante :

   - on calcule une tension de référence Uréf à partir d'une courbe de charge dudit accumulateur selon la formule :

$$Uréf = U - kréf \ (T - Tc)$$

   dans laquelle kréf est un coefficient égal à la pente de la droite U =f(T) qui est variable pour des taux de charge inférieurs ou égaux à 55% de Cn, puis constant pour des taux de charge supérieurs à 55% de Cn,
   - on établit l'équation de la droite de variation de Uréf en fonction du taux de charge,
   - on calcule ledit seuil Us à partir de ladite équation pour un taux de charge final souhaité supérieur à 55% de Cn.

5. Procédé selon la revendication 4, dans lequel ledit seuil Us dépend du régime de charge à raison de 0,70V par unité de courant exprimé en Ic, $I_c$ étant le courant nécessaire à la décharge de la capacité nominale Cn dudit accumulateur en une heure.

**6.** Procédé selon l'une des revendications précédentes, dans lequel ladite température de référence Tc vaut 0°C, ladite tension de référence Uréf est calculée par la formule :

$$Uréf = U - (kréf \times T)$$

et ladite tension corrigée est calculée par la formule suivante :

$$Uc = U - k\,T$$

**Claims**

**1.** A method of controlling rapid charging of an alkaline-electrolyte industrial storage cell of the "maintenance-free" or "sealed" type, the cell possessing a nominal capacity Cn, a voltage U, and an internal temperature T, wherein charging is stopped at a percentage charge greater than 55% of Cn as follows:

· a voltage threshold Us is fixed which corresponds to the desired final percentage charge for said cell;
· the voltage U and the temperature T of said cell are measured;
· a corrected voltage Uc is calculated using the following formula:

$$Uc = U - k(T - Tc)$$

where voltages are expressed in volts, Tc is an arbitrarily-selected reference temperature, and $\underline{k}$ is a constant coefficient expressed in volts per temperature unit; and
· Uc is compared with said voltage threshold Us, and charging is stopped when Uc is not less than Us.

**2.** A method according to claim 1, in which said coefficient $\underline{k}$ is defined as follows:

· the straight line U=f(T) is plotted for each percentage charge, from charging curves of said storage cell established at at least two different initial temperatures; and
· the slope of said straight line is measured in the range of percentage charge greater than 55% of Cn, said slope being equal to $\underline{k}$.

**3.** The method according to claim 2, in which said coefficient $\underline{k}$ has a value of -0.015 V/°C for percentage charges greater than 55% of Cn.

**4.** The method according to any one of the preceding claims, in which said voltage threshold Us is fixed as follows:

· a reference voltage Uref is calculated from a charging curve of said storage cell, using the formula:

$$Uref = U - kref(T - Tc)$$

in which kref is a coefficient equal to the slope of the straight line U = f(T) which is variable for percentage charge less than or equal to 55% of Cn, and then constant for percentage charge greater than 55% of Cn;
· the equation of the straight line for variation of Uref as a function of percentage charge is determined; and
· said threshold Us is calculated from said equation for a desired final percentage charge greater than 55% of Cn.

**5.** A method according to claim 4, in which said threshold Us depends on charging rate by 0.70 V per current unit expressed in terms of Ic, where Ic is the current required for discharging the nominal capacity Cn of said storage cell in one hour.

**6.** A method according to any one of the preceding claims, in which said reference temperature Tc is 0°C, said reference voltage Uref is calculated by the formula:

$$Uref = U - (kref \ x \ T)$$

and said corrected voltage is calculated using the following formula:

$$Uc = U - kT$$

**Patentansprüche**

1. Verfahren zur Prüfung der Schnell-Ladung eines industriellen Akkumulators mit alkalischem Elektrolyt vom "wartungsfreien" oder "dichten" Typ mit einer Nennkapazität Cn, einer Spannung U und einer Innentemperatur T, **dadurch gekennzeichnet, dass** die Abschaltung der Ladung mit einer 55% Cn überschreitenden Ladestärke wie folgt durchgeführt wird:

   - Man legt eine Spannungsschwelle Us fest, die einer gewünschten Endladestärke des Akkumulators entspricht;
   - Man misst die Spannung U und die Temperatur T des Akkumulators;
   - Man berechnet eine korrigierte Spannung Uc anhand folgender Formel:

$$Uc = U - k \ (T - Tc),$$

   wobei die Spannungen in Volt ausgedrückt werden, wobei Tc eine willkürlich gewählte Referenztemperatur ist, und k ist ein konstanter Koeffizient, der in Volt pro Temperatureinheit ausgedrückt wird;
   - Man vergleicht Uc mit der Spannungsschwelle Us und man schaltet die Ladung ab, wenn Uc mindestens gleich Us ist.

2. Verfahren nach Anspruch 1, in dem der Koeffizient k wie folgt definiert wird:

   - Man zieht die Gerade U=f(T) für jeden Wert des Ladegrads mittels der Ladekurven des Akkumulators, die mit mindestens zwei verschiedenen Ausgangstemperaturen festgelegt sind;
   - Man misst die Neigung der Geraden im Bereich der Ladestärken, die 55% Cn überschreiten, wobei die Neigung gleich k ist.

3. Verfahren nach Anspruch 2, in dem der Koeffizient k für -0,015 V/°C bei 55% Cn überschreitenden Ladestärken gilt.

4. Verfahren nach einem der vorhergehenden Ansprüche, in dem die Spannungsschwelle Us wie folgt festgelegt ist:

   - Man berechnet eine Referenzspannung Uref ab einer Ladekurve des Akkumulators nach der Formel:

$$Uref = U - kref \ (T - Tc),$$

   wobei kref ein Koeffizient ist, der gleich der Neigung der Geraden U=f(T) ist, die bei Ladestärken unter oder von gleich 55% Cn variabel und dann bei Ladestärken über 55% Cm konstant ist.
   - Man legt die Gleichung der Variationsgeraden von Uref in Abhängigkeit von der Ladestärke fest;
   - Man berechnet die Schwelle Us ab der Gleichung für einen gewünschten Endladegrad oberhalb von 55% Cn.

5. Verfahren nach Anspruch 4, in dem die Schwelle Us vom Ladebetrieb in Höhe von 0,70 V pro in Ic, ausgedrückter Stromeinheit abhängt, wobei $I_c$ der zur Entladung der Nennkapazität Cn des Akkumulators in einer Stunde erforderliche Strom ist.

6. Verfahren nach einem der vorhergehenden Ansprüche, in dem die Referenztemperatur Tc als 0°C gilt, wobei die Referenzspannung Uref durch folgende Formel berechnet wird:

$$Uref = U - (kref \times T),$$

und die korrigierte Spannung durch folgende Formel berechnet wird:

$$Uc = U - kT$$

FIG. 1

FIG. 2

# FIG. 3

# FIG. 4

# FIG. 5

50

52

51

%Cn

# FIG. 6

60

61

62

%Cn

# FIG. 7

# FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5703468 A